# EUROPÄISCHE PATENTSCHRIFT

(11) **EP 1 237 715 B1**
(45) Veröffentlichungstag und Bekanntmachung des Hinweises auf die Patenterteilung: **09.12.2009**
(21) Anmeldenummer: 00979514.7
(22) Anmeldetag: 26.10.2000
(51) Int. Cl.: B32B 3/02, B32B 5/18, B32B 33/00

(54) **KUNSTSTOFFFOLIE MIT EINER RAUHEN OBERFLÄCHE ZUR ERHÖHUNG DES REIBUNGSKOEFFIZIENTEN**
PLASTIC FILM
FILM PLASTIQUE

(30) Priorität: 08.11.1999 DE 19953707
(43) Veröffentlichungstag der Anmeldung: 11.09.2002
(73) Patentinhaber: Huhtamaki Forchheim Zweigniederlassung der Huhtamaki Deutschland GmbH & Co. KG, 91301 Forchheim (DE)
(72) Erfinder: GÜNTER, Walter, 91301 Forchheim (DE); IHDE, Thomas, 91301 Forchheim (DE)
(74) Vertreter: Hutzelmann, Gerhard
(86) Internationale Anmeldenummer: PCT/EP2000/010573
(87) Internationale Veröffentlichungsnummer: WO 2001/034384

(56) Entgegenhaltungen:
- EP-A- 0 219 198
- DE-A- 3 045 444
- GB-A- 1 386 037
- US-A- 3 709 752
- US-A- 3 974 312
- DATABASE WPI Section Ch, Week 199840 Derwent Publications Ltd., London, GB; Class A18, AN 1998-462973 XP002173567 & JP 10 195256 A (MARUSHIN KAGAKU GOMU KK) , 28. Juli 1998 (1998-07-28)

## Beschreibung

Die Erfindung bezieht sich auf eine Kunststoff-Folie mit einer rauhen Oberfläche zur Erhöhung des Reibungskoeffizienten.

Derartige Folien sind in der Praxis bekannt, wobei meist in den Kunststoff bereits ein körniges Füllmittel eingemischt ist.

GB1386037 definiert in den Ansprüchen 1, 5, 8 und 10 sowie im Beispiel IV eine, mit Füllstoff und Schäummittel beschichtete Kunststoffolie.
Die so erzeugte Oberfläche ist offenporig und hat einen hohen Reibungskoeffizienten.

DE3045444 offenbart einen Bodenbelag mit einer geschäumten, rauhen Rückenfläche, die 50-75% Quartz als Füllstoff enthält.

EP219198 beschreibt mechanisch aufgerauhte Kunststoffolien.

JP10195256 offenbart eine abriebfeste, elastische Schicht enthaltend Schaum.

US3974312 offenbart coextrudierte Schichten mit Füllstoffen in der Herstellung von Materialien mit hohem Reibungswiderstand.

Dies führt jedoch dazu, daß die Folie selbst nur eine begrenzte Festigkeit aufweist und auch die Rauhigkeit nur gering ist.

Der Erfindung liegt die Aufgabe zugrunde, eine Folie der genannten Art so auszugestalten, daß eine sehr gute Oberflächenrauhigkeit erreicht wird, ohne die Festigkeit der Folie zu beeinträchtigen.

Diese Aufgabe wird erfindungsgemäß dadurch gelöst, daß wenigstens eine Seite der Folie mit einer Schicht versehen ist, welche die rauhe Oberfläche enthält.

Durch die Trennung von Tragschicht und Schicht mit rauher Oberfläche, können beide optimal ausgebildet sein.

Als sehr vorteilhaft hat es sich erwiesen wenn gemäß der Erfindung die eigentliche Folie und die die rauhe Oberfläche aufweisende Schicht bzw. Schichten im Coextrusionsverfahren hergestellt sind.

Damit ist trotz der getrennten Beeinflussung der Schichten eine rationelle Herstellung der Folie gewährleistet.

Die Erfindung liegt darin, daß wenigstens eine der die rauhe Oberfläche aufweisenden Schichten ein Treibmittel enthält, das unmittelbar nach dem Verlassen der Coextrusionsdüse Gasblasen erzeugt, welche die Schicht derart zerstört, daß eine unregelmäßig rauhe Oberfläche entsteht.

Das extrudierte Beschichtungsmittel besteht aus einem Bindemittel und einem Füllstoff.

Der Füllstoff weist gemäß einer weiteren Ausgestaltung der Erfindung eine körnige Struktur auf und besteht insbesondere aus Korund und/oder Quarzsand.

Gemäß einer weiteren vorteilhaften Ausgestaltung der Erfindung liegt die Korngröße des Füllmittels im Bereich zwischen 40 und 250 µm.

Eine vorteilhafte weitere Ausgestaltung der Erfindung ist dadurch gekennzeichnet, daß das Füllmittel nach dem Auftrag in einer streifenförmigen Struktur vorliegt.

Für die Herstellung der streifenförmigen Struktur gibt es verschiedene Möglichkeiten; es muß nur sicher sein, daß ein ziehender Auftrag erfolgt.

Erfindungsgemäß ist es jedoch auch möglich, daß das Füllmittel am fertigen Erzeugnis in einer verzweigten, sogenannten Aststruktur vorliegt.

Sowohl mit der streifenförmigen Struktur als auch mit der Aststruktur wird ein sehr gutes Antirutschverhalten der Folie erzielt.

Als sehr vorteilhaft hat es sich auch erwiesen, wenn gemäß einer vorteilhaften Weiterbildung der Erfindung das Auftragsgewicht des Bindemittel mit dem Füllstoff etwa 5 bis 50 g/m² beträgt.

Dabei ist es sehr günstig, wenn der Füllstoff Anteil etwa 20 bis 70 % des Auftragsgewichtes beträgt.

In der Zeichnung ist die Erfindung anhand von drei Ausführungsbeispielen veranschaulicht. Dabei zeigen:
Fig. 1 eine Draufsicht auf eine Kunststoff-Folie, die zusammen mit einer oberen Schicht im Coextrusionsverfahren hergestellt ist und eine weitgehend zerrissene Oberfläche aufweist,
Fig.2 eine Draufsicht einer Kunststoff-Folie mit einem streifenförmigen Auftrag eines körnigen Füllmittels und

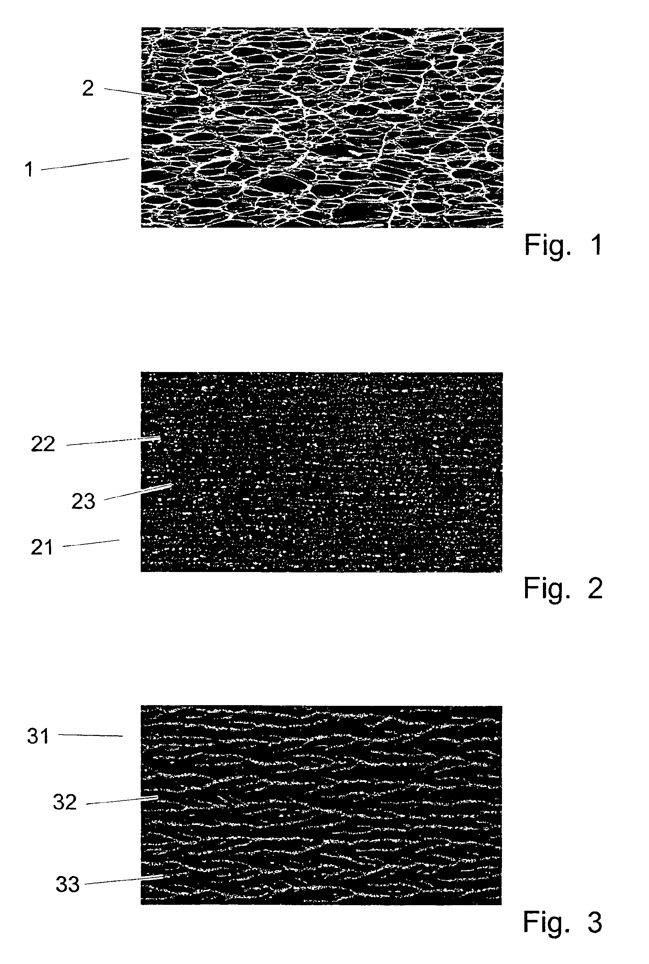

Mit 1 ist in Fig. eine Kunststoff-Folie bezeichnet, die aus einer nicht näher dargestellten Grundfolie und einer mit dieser coextrudierten Oberflächen-Schicht 2 besteht. Diese Oberflächen-Schicht 2 besteht aus einem Polyolefin, beispielsweise HDPE oder PP, in dem ein Treibmittel gelöst ist, das bei der beim Austritt der Bahn aus der Coextrusionsdüse eintretenden Entspannung aufschäumt und die Schichtoberfläche zerreißt. Es bildet sich dabei die in Fig.1 dargestellte Struktur der Oberflächen-Schicht 2.

Beim Ausführungsbeispiel nach Fig.2 ist eine Kunststoff-Folie 21 vorgesehen, die ein< ebenfalls nicht sichtbare Grundfolie enthält, die mit einer Oberflächen-Schicht 22 beschichtet ist. Diese Schicht 22 besteht aus einem Bindemittel und einem Füllmittel 23, die beim Auftragen auf die Grundfolie innig vermischt sind. Beim Auftragen finde jedoch aufgrund eines ziehenden Auftrages eine Konzentration des Füllmittels 23 in unterbrochenen Längsstreifen statt.

Bei einem differenzierten Auftrag wird dagegen auf einer Kunststoff-Folie 31 eine astförmige Auftrags-Struktur 33 innerhalb der Auftragsschicht 32 erzielt.

Bei den beiden Ausführungsbeispielen nach Fig.2 und 3 kann das Bindemittel vollflächig oder nur im Bereich der Füllmittelstruktur aufgetragen sein.

Als Füllmittel wird je nach Einsatzzweck Korund oder Quarzsand verwendet, die mit einem Anteil von 20 bis 70 % des Gesamtauftragsgewichtes eingesetzt werden.

Das Auftragsgwicht beträgt etwa 5 bis 50 g/m² und die Korngröße des Füllmittels beträgt 40 bis 250 µm.

Alle drei Ausgestaltungen ergeben einen sehr hohen Reibungskoeffizienten für die Kunststoff-Folie, so daß sie vielseitig eingesetzt werden kann.

Ein möglicher Einsatz liegt in der Abdeckung von Dachflächen, die dadurch begehbar sind, ohne daß eine Rutschgefahr besteht.

Dabei ist es möglich, sowohl reine Holzverbretterungen oder auch klebende Flächen mit der Kunststoff Folie abzudecken.

Auch für das Verpacken von Tiefkühlkost sind diese Kunststoff-Folien sehr effektiv einsetzbar, da das Verrutschen der normalerweise sehr glatten Folienverpacküngen wirksam verhindert wird.

Möglich ist auch eine beidseitige Beschichtung der Grundfolie, wobei verschiedene Ausgestaltungen der Oberflächen-Schichten möglich ist.

## Patentansprüche

1. Kunststoff-Folie mit einer rauhen Oberfläche zur Erhöhung des Reibungskoeffizienten, wobei wenigstens eine Seite der Folie mit einer Schicht (2,22,32) versehen ist, welche die rauhe Oberfläche enthält, **dadurch gekennzeichnet, daß** die eigentliche Folie und die die rauhe Oberfläche aufweisende Schicht (2) bzw. Schichten im Coextrusionsverfahren hergestellt sind und daß die die rauhe Oberfläche aufweisende Schicht (2) ein gelöstes Treibmittel enthält, das unmittelbar nach dem Verlassen der Coextrusionsdüse Gasblasen erzeugt, welche die Schicht (2) derart zerstört, daß eine unregelmäßig rauhe Oberfläche entsteht.

2. Kunststoff-Folie mit einer rauhen Oberfläche zur Erhöhung des Reibungskoeffizienten, wobei wenigstens eine Seite der Folie mit einer Schicht (2,22,32) versehen ist, welche die rauhe Oberfläche enthält, **dadurch gekennzeichnet, daß** wenigstens eine der die rauhe Oberfläche erzeugenden Schichten (22,32) im Beschichtungsverfahren aufgebracht ist, wobei das Beschichtungsmittel aus einem Bindemittel und einem Füllstoff besteht und der Füllstoff eine körnige Struktur aufweist und die Beschichtung als ziehender Auftrag erfolgt, wodurch der Füllstoff auf dem fertigen Erzeugnis einer streifenförmigen Struktur, unterbrochenen Längsstreifen oder in einer verzweigten, so genannten Aststruktur vorliegt.

3. Kunststoff-Folie nach Anspruch 2, **dadurch gekennzeichnet, daß** der Füllstoff aus Korund und/oder Quarzsand besteht.

4. Kunststoff-Folie nach Anspruch 2 oder 3, **dadurch gekennzeichnet, daß** die Korngröße des Füllmittels im Bereich zwischen 40 und 250 µm liegt.

5. Kunststoff Folie nach einem der Ansprüche 2 bis 4 , **dadurch gekennzeichnet, daß** das Auftragsgewicht des Bindemittels mit dem Füllstoff etwa 5 bis 50 g/m² beträgt.

6. Kunststoff-Folie nach einem der Ansprüche 2 bis 5, **dadurch gekennzeichnet, daß** der Füllstoff-Anteil etwa 20 bis 70 % des Auftragsgewichtes beträgt.

## Claims

1. Synthetic material film with a rough surface for increasing the coefficient of friction, wherein at least one side of the film is provided with a layer (2, 22, 32) containing the rough surface, **characterised in that** the actual film and the layer (2) or layers, which has or have the rough surface, are produced in a coextrusion process and that the layer (2) having the rough surface contains a dissolved blowing agent which directly after the departure from the coextrusion nozzle generates gas bubbles destroying the layer (2) in such a manner that an irregular, rough surface arises.

2. Synthetic material film with a rough surface for increasing the coefficient of friction, wherein at least one side of the film is provided with a layer (2, 22, 32) containing the rough surface, **characterised in that** at least one of the layers (22, 32) producing the rough surface is applied in a coating process, wherein the coating medium consists of a binder and a filler and the filler has a granular structure and the coating is carried out as a drawn coat, whereby the filler is present on the finished product in a strip-shaped structure interrupted longitudinal strips or a branched, so-called branch structure.

3. Synthetic material film according to claim 1, **characterised in that** the filler consists of corundum and/or quartz sand.

4. Synthetic material film according to claim 2 or 3, **characterised in that** the grain size of the filler lies in the range between 40 and 250 microns.

5. Synthetic material film according to any one of the claims 2 to 4, **characterised in that** the coat weight of the binder together with a filler is approximately 5 to 50 g/m².

6. Synthetic material film according to any one of claims 2 to 5, **characterised in that** the filler component is approximately 20 to 70% of the coat weight.

## Revendications

1. Film plastique ayant une surface rugueuse destinée à augmenter le coefficient de frottement, sachant qu'au moins une face du film est pourvue d'une couche (2, 22, 32) qui contient la surface rugueuse, **caractérisé en ce que** le film proprement dit et la couche (2) ou les couches présentant la surface rugueuse sont réalisés par coextrusion, et **en ce que** la couche (2) présentant la surface rugueuse contient un agent gonflant dissous qui produit, juste après avoir quitté la buse de coextrusion, des bulles de verre qui détruisent la couche (2) de telle sorte qu'on obtient une surface irrégulièrement rugueuse.

2. Film plastique ayant une surface rugueuse destinée à augmenter le coefficient de frottement, sachant qu'au moins une face du film est pourvue d'une couche (2, 22, 32) qui contient la surface rugueuse, **caractérisé en ce qu'**au moins une des couches (22, 32) produisant la surface rugueuse est appliquée par enduction, sachant que le produit d'enduction est constitué d'un liant et d'une charge, que la charge présente une structure granuleuse et que l'enduction s'effectue par application tirée, de sorte que la charge est présente sur le produit fini sous la forme d'une structure striée, de stries longitudinales interrompues ou d'une structure ramifiée dite « en branches d'arbre ».

3. Film plastique selon la revendication 2, **caractérisé en ce que** la charge est constituée de corindon et/ou de verre quartzeux.

4. Film plastique selon la revendication 2 ou 3, **caractérisé en ce que** la grosseur de grains de la charge est comprise dans la plage de 40 à 250 µm.

5. Film plastique selon l'une des revendications 2 à 4, **caractérisé en ce que** le poids d'application du liant pourvu de la charge est d'environ 5 à 50 g/m².

6. Film plastique selon l'une des revendications 2 à 5, **caractérisé en ce que** la part de la charge est d'environ 20 à 70% du poids d'application.
